# EUROPÄISCHE PATENTANMELDUNG

(11) **EP 4 129 874 A1**
(43) Veröffentlichungstag der Anmeldung: **08.02.2023**
(21) Anmeldenummer: 21000213.5
(22) Anmeldetag: 06.08.2021
(51) Int. Cl.: B65G 65/00, B25J 15/02, B65G 47/90

(54) **TRANSPORTBEHÄLTER-ENTLADESTATION UND VERFAHREN ZUM ENTLADEN**

(71) Anmelder: Zimmer, Günther Stephan, 77866 Rheinau (DE); Zimmer, Martin, 77866 Rheinau (DE)
(72) Erfinder: Zimmer, Günther Stephan, 77866 Rheinau (DE); Zimmer, Martin, 77866 Rheinau (DE)
(74) Vertreter: Thämer, Wolfgang

(57) **Zusammenfassung**

Die Erfindung betrifft eine Transportbehälter-Entladestation mit einer Transportbehälter-Zuführvorrichtung, mit einer Leerguttransportvorrichtung, mit einer Stückguttransportvorrichtung, mit einem einen mindestens ein Greifersystem tragenden Industrieroboter aufweisenden Handhabungssystem und mit einem auf eine Transportbehälter-Entladeposition gerichteten Kamerasystem sowie ein Verfahren zum Entladen eines mit Stückgütern beladenen Transportbehälters an einer derartigen Transportbehälter-Entladestation. Das Handhabungssystem ist mittels eines aus mittels des Kamerasystems erfassten geometrischen Daten ermittelten Sollwertdatensatzes an der Transportbehälter-Entladeposition steuerbar. Das Greifersystem weist mindestens zwei relativ zueinander verstellbare Greifbacken auf. Mindestens eine dieser Greifbacken ist mittels eines Parallelogrammgetriebes antreibbar. Außerdem ist das Greifersystem mittels des Industrieroboters oberhalb der Stückguttransportvorrichtung positionierbar.

Mit der vorliegenden Erfindung wird das Materialflusssystem einer Transportbehälter-Entladestation weitergebildet.

## Beschreibung

Die Erfindung betrifft eine Transportbehälter-Entladestation mit einer Transportbehälter-Zuführvorrichtung, mit einer Leerguttransportvorrichtung, mit einer Stückguttransportvorrichtung, mit einem einen mindestens ein Greifersystem tragenden Industrieroboter aufweisenden Handhabungssystem und mit einem auf eine Transportbehälter-Entladeposition gerichteten Kamerasystem sowie ein Verfahren zum Entladen eines mit Stückgütern beladenen Transportbehälters an einer derartigen Transportbehälter-Entladestation.

Aus der DE 20 2020 100 320 U1 ist eine Transportbehälter-Entladestation mit einem Kamerasystem bekannt.

Der vorliegenden Erfindung liegt die Problemstellung zugrunde, das Materialflusssystem einer derartigen Transportbehälter-Entladestation weiterzubilden.

Diese Problemstellung wird mit den Merkmalen des Hauptanspruches gelöst. Dazu ist das Handhabungssystem mittels eines aus mittels des Kamerasystems erfassten geometrischen Daten ermittelten Sollwertdatensatzes an der Transportbehälter-Entladeposition steuerbar. Das Greifersystem weist mindestens zwei relativ zueinander verstellbare Greifbacken auf. Mindestens eine dieser Greifbacken ist mittels eines Parallelogrammgetriebes antreibbar. Außerdem ist das Greifersystem mittels des Industrieroboters oberhalb der Stückguttransportvorrichtung positionierbar.

Zum Entladen wird der zu entladende Transportbehälter mittels der Transportbehälter-Zuführvorrichtung in die Transportbehälter-Entladeposition gefördert. Das Kamerasystem erfasst zumindest die Kontur des Transportbehälters und die Kontur der Stückgüter im Transportbehälter. Aus den mittels des Kamerasystems erfassten geometrischen Daten des Transportbehälters und der darin gelagerten Stückgüter wird für jedes einzelne Stückgut ein Sollwert-Datensatz zur Steuerung des Handhabungssystem ermittelt. Mittels des Industrieroboters wird das Greifersystem oberhalb des Transportbehälters an der Transportbehälter-Entladeposition positioniert. Der Industrieroboter entnimmt mittels des Greifersystems ein einzelnes Stückgut aus dem Transportbehälter. Der Industrieroboter positioniert das Greifersystem oberhalb der Stückguttransportvorrichtung. Außerdem legt das Greifersystem das Stückgut auf der Stückguttransportvorrichtung ab.

In der Transportbehälter-Entladeposition gibt das Kamerasystem mittels der Konturenerkennung den Sollwert-Datensatz für die Steuerung des Industrieroboters vor. Das Greifersystem des Industrieroboters wird entsprechend dieses Sollwert-Datensatzes an der Transportbehälter-Entladeposition positioniert. Die Ausbildung des Greifersystems mit mindestens einem Parallelogrammgetriebe ermöglicht die Entnahme von Stückgütern aus dem Transportbehälter, selbst wenn diese Stückgüter nahe an anderen Stückgütern oder nahe der Seiten- oder Stirnwände des Transportbehälters liegen. Das mittels des Greifersystems aufgenommene Stückgut wird anschließend auf dem Stückguttransportbandsystem abgelegt.

Weitere Einzelheiten der Erfindung ergeben sich aus den Unteransprüchen und der nachfolgenden Beschreibung schematisch dargestellter Ausführungsformen.
- Figur 1:: Transportbehälter-Entladestation;
- Figur 2:: Figur 1 von der Seite des Stückgutbandes;
- Figur 3:: Detail der Transportbehälter-Entladestation ohne Transportbehälter und Handhabungsvorrichtung;
- Figur 4:: Isometrische Schnittdarstellung eines Transportbehälters;
- Figur 5:: Greifersystem mit geschlossenen Greifbacken;
- Figur 6:: Greifersystem mit geöffneten Greifbacken;
- Figur 7:: Belagträger;
- Figur 8:: Kurbelhebel;
- Figur 9:: Schwingenhebel;
- Figur 10:: Schnittdarstellung des Greifersystems;
- Figur 11:: Sauggreifersystem;
- Figur 12:: Greifbacke mit Antrieb;
- Figur 13:: Elektromotor mit Schneckengetriebe.

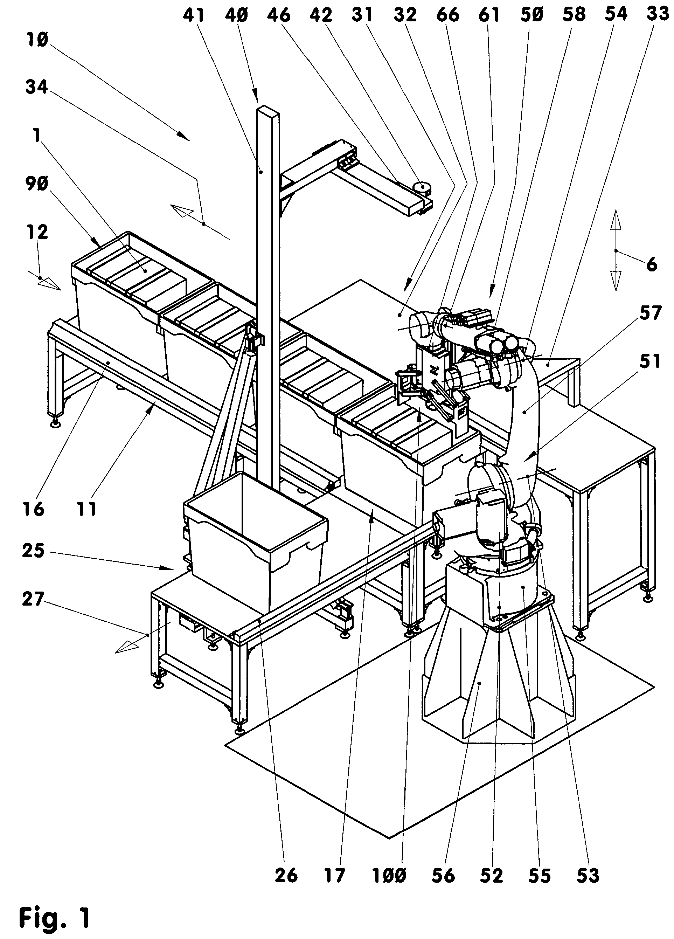

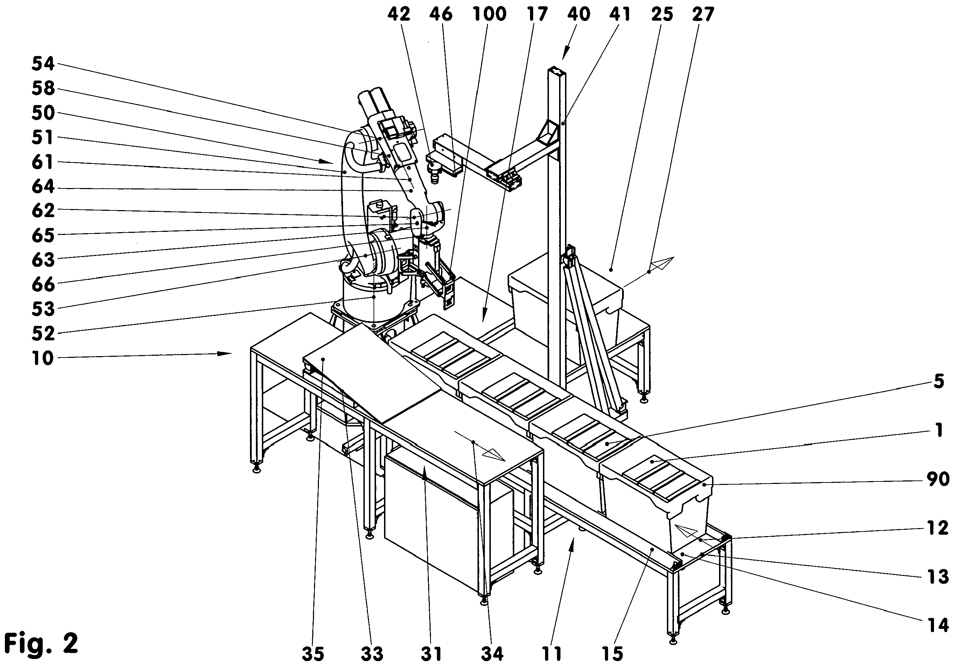

Die Figuren 1 und 2 zeigen eine Transportbehälter-Entladestation (10). An dieser Transportbehälter-Entladestation (10) werden in Transportbehälter (90) transportierte Stückgüter (1) aus dem Transportbehälter (90) entnommen und außerhalb des Transportbehälters (90) abgelegt. Der entleerte Transportbehälter (90) wird dann weitergefördert. Im Ausführungsbeispiel sind die Stückgüter (1) Schuhkartons (1), die jeweils z.B. mit einem Paar Schuhe beladen sind. Die Stückgüter (1) können jedoch auch Werkstücke, in Transportpackungen verpackte Gegenstände, etc. sein.

Die dargestellte Transportbehälter-Entladestation (10) hat eine Transportbehälter-Zuführvorrichtung (11), eine Leerguttransportvorrichtung (25) und eine Stückguttransportvorrichtung (31). Die Transportbehälter-Zuführvorrichtung (11) und die Leerguttransportvorrichtung (25) sind z.B. trassen- und flurgebundene Fördervorrichtungen. Im Ausführungsbeispiel sind die Förderrichtungen (12, 27) horizontal. Die Förderrichtungen (12, 27) können jedoch auch Steigungs- und Gefällstrecken aufweisen. Die Transportbehälter-Zuführvorrichtung (11) und die Leerguttransportvorrichtung (25) können Teile eines Umlaufföderers sein. Mittels des Umlaufförderes werden beispielsweise Transportbehälter (90) von einer Beladestation zur Transportbehälter-Entladestation (10) gefördert. Nach dem Entleeren der Transportbehälter (90) werden die leeren Transportbehälter (90) dann als Leergut wieder zur Beladestation gefördert.

Die Transportbehälter-Zuführvorrichtung (11) kann als Unstetigförderer oder als staufähiger Stetigförderer ausgebildet sein. Beispielsweise kann sie einen Kettenförderer, einen Rollenbahnförderer, einen Bandförderer, etc. aufweisen. Im Ausführungsbeispiel hat sie einen Gurtbandförderer (13) in der Bauart eines Unstetigförderers. Beim Einsatz eines staufähigen Stetigförderes besteht beispielsweise zwischen dem einzelnen Transportbehälter (90) und dem Gurtband (14) ein niedriger Haft- und Gleitreibungskoeffizient, sodass bei einem Stau der Transportbehälter (90) der Gurtbandförderer (13) beschädigungsfrei weiterfördern kann.

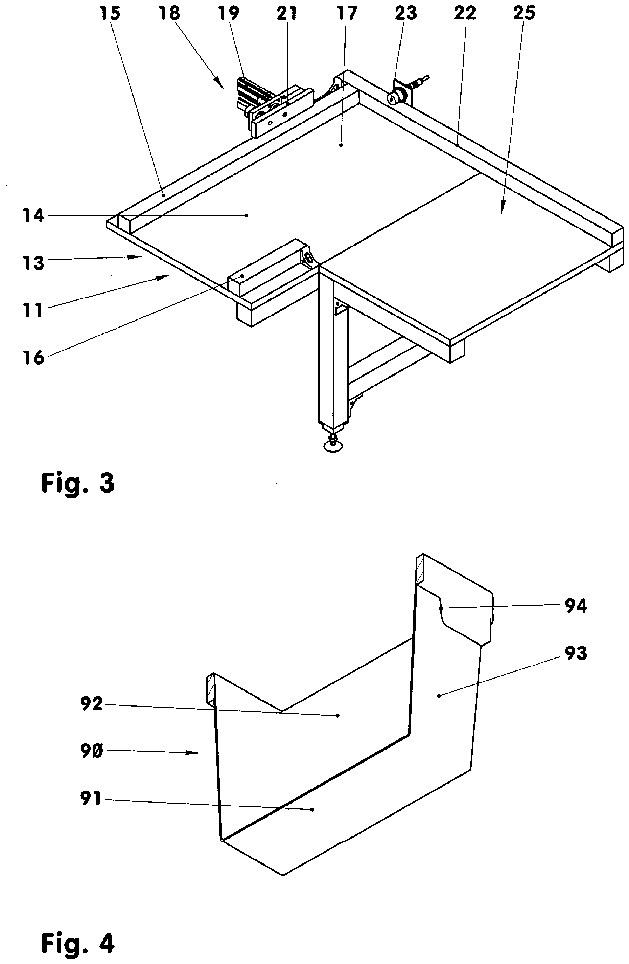

Seitlich am Gurtbandförderer (13) sind zwei Leitschienen (15, 16) angeordnet. Diese zentrieren die ankommenden Transportbehälter (90) vor einer Transportbehälter-Entladeposition (17). Gegebenenfalls können die Leitschienen (15, 16) Einführschrägen aufweisen. Zumindest eine erste Leitschiene (15) ist in die Transportbehälter-Endladeposition (17) fortgesetzt. Oberhalb dieser ersten Leitschiene (15) ist im Bereich der Transportbehälter-Entladeposition (17) eine Querschubzylindereinheit (18) angeordnet, vgl. Figur 3. Diese umfasst eine Zylinder-Kolben-Einheit (19) und eine Druckplatte (21). Die Druckplatte (21) ist mittels der Zylinder-Kolben-Einheit (19) quer zur Förderrichtung (12) der Transportbehälter-Zuführvorrichtung (11) verfahrbar.

An der Stirnseite ist die Transportbehälter-Entladeposition (17) mittels einer Stirnschiene (22) begrenzt. Die Stirnschiene (22) ist so ausgebildet wie die Leitschienen (15, 16). Beispielsweise fluchtet sie mit einer Anlageschiene (26) der Leerguttransportvorrichtung (25). An der Stirnschiene (22) ist ein Sensor (23), z.B. ein induktiver oder kapazitiver Näherungssensor, angeordnet. Dieser Sensor (23) ist entgegen der Förderrichtung (12) der Transportbehälter-Zuführvorrichtung (11) gerichtet.

Die Leerguttransportvorrichtung (25) kann als Stetigförderer oder als Unstetigförderer ausgebildet sein. Im Ausführungsbeispiel liegen die Förderrichtung (12) der Transportbehälter-Zuführvorrichtung (11) und die Förderrichtung (27) der Leerguttransportvorrichtung (25) in einer gemeinsamen Ebene orthogonal zueinander. Hierbei ist die Förderrichtung (27) der Leerguttransportvorrichtung (25) von der Transportbehälter-Entladeposition (17) weg orientiert. Die Leerguttransportvorrichtung (25) kann beispielsweise so ausgebildet sein wie die Transportbehälter-Zuführvorrichtung (11).

Die Stückguttransportvorrichtung (31) umfasst im Ausführungsbeispiel einen Stückgut-Bandförderer (32) und eine an diesem angeordnete Aufgaberutsche (33). Die Stückguttransportvorrichtung (31) kann auch ohne eine Aufgaberutsche (33) ausgebildet sein. Anstatt eines Stückgut-Bandförderers (32) kann auch ein anderer der im Zusammenhang mit der Transportbehälter-Zuführvorrichtung (11) genannten Förderer eingesetzt werden. Der dargestellte Stückgut-Bandförderer (32) kann als Stetigförderer oder als Unstetigförderer ausgebildet sein. Die Förderrichtung (34) des Stückguttransportbandförderes (32) ist in einer von der der Transportbehälter-Entladeposition (17) weg orientierten Richtung orientiert. In den Darstellungen der Figuren 1 und 2 ist der Stückgut-Bandförderer (32) erhöht gegenüber der Transportbehälter-Zuführvorrichtung (11) angeordnet. Im dargestellten Ausführungsbeispiel ist die Stückguttransportvorrichtung (31) parallel zur Transportbehälter-Zuführvorrichtung (11) angeordnet. Die Förderrichtung (34) der Stückguttransportvorrichtung (31) ist entgegengesetzt zur Förderrichtung (12) der Transportbehälter-Zuführvorrichtung (11) orientiert.

Die Aufgaberutsche (33) hat im Ausführungsbeispiel eine ebene Gleitfläche (35), die einen konstanten Winkel zu einer horizontalen Ebene einschließt. Dieser Winkel beträgt im Ausführungsbeispiel 30 Grad. Beispielsweise liegt dieser Winkel zwischen 15 Grad und 45 Grad. Der genannte Winkel kann einstellbar sein. Anstatt einer Gleitfläche (35) kann die Aufgaberutsche (33) auch eine Rollenbahn, ein Umlaufband, etc. aufweisen. An ihren seitlichen Rändern kann die Aufgaberutsche (33) Zentrierleisten aufweisen. Hiermit können auf die Aufgaberutsche aufgegebene Stückgüter (1) beispielsweise für den Transport auf den nachfolgenden Stückgut-Bandförderer (32) ausgerichtet werden.

Der einzelne Transportbehälter (90), vgl. Figur 4, ist ein nach oben offener kastenförmiger Behälter. Seine Höhe beträgt beispielsweise 70 % seiner Länge. Seine Breite beträgt z.B. 95 % seiner Höhe. Der Transportbehälter (90) hat im Ausführungsbeispiel einen zumindest annähernd ebenen Boden (91). Dieser ist beispielsweise rechteckig ausgebildet. Der Boden (91) ist z.B. als Gleitfläche ausgebildet. Es ist auch denkbar, im Boden (91) einzelne Gleitrippen auszubilden oder am Boden (91) Rollen anzuordnen.

Die Seitenwände (92) und die Stirnwände (93) sind vom Boden (91) aus schräg nach außen gerichtet. Ihre Neigung zu jeweils einer vertikalen Ebene beträgt beispielsweise drei Grad. An den Stirnwänden (93) des Transportbehälters (90) können beispielsweise Griffmulden (94) ausgebildet sein. Der einzelne Transportbehälter (90) ist damit sowohl manuell als auch mittels einer Handhabungsvorrichtung umsetzbar.

Die einzelnen Schuhkartons (1) stehen beispielsweise senkrecht im Transportbehälter (90). An mindestens einer Stirnseite (5) des Schuhkartons (1) kann ein Etikett zur Identifizierung angeordnet sein. In der Darstellung der Figur 1 kann der einzelne Transportbehälter (90) drei Schuhkartons (1) aufnehmen. Bei einer derartigen Befüllung des Transportbehälters (90) haben die einzelnen Schuhkartons (1) sowohl in der Längsrichtung des Transportbehälters (90), als auch in der Querrichtung des Transportbehälters (90) nur ein geringes Spiel.

Der einzelne, quaderförmig ausgebildete Schuhkarton (1) hat einen Deckel (3). Der Verschluss des Deckels (3) ist beispielsweise verrastet. Die Lage des Schwerpunkts des einzelnen Schuhkartons (1) ist abhängig von seiner Beladung. Beispielsweise kann der Schwerpunkt eines mit Stiefeln beladenen Schuhkartons (1) an einer anderen Stelle liegen als der Schwerpunkt eines mit Sandalen beladenen Schuhkartons (1). Auch kann sich die Masse der einzelnen Schuhkartons (1) unterscheiden. Beispielsweise ist die Masse des mit Stiefeln beladenen Schuhkartons (1) größer als die Masse des mit Sandalen beladenen Schuhkartons (1).

An der Transportbehälter-Entladeposition (17) ist ein optisches Erfassungssystem (40) angeordnet. Das optische Erfassungssystem (40) steht z.B. auf dem Hallenboden. Es umfasst im Ausführungsbeispiel ein auf einem Stativ (41) angeordnetes Kamerasystem (42) und eine Beleuchtungsvorrichtung (46). Das Kamerasystem (42) ist dabei beispielsweise so ausgerichtet, dass es genau einen in der Transportbehälter-Entladeposition (17) stehenden Transportbehälter (90) mitsamt seinem Inhalt erfasst. Der Erfassungsbereich des Kamerasystems (42) ist dabei auf die Transportbehälter-Entladeposition (17) gerichtet.

Das Kamerasystem (42) hat eine oder mehrere optische Linsen. Beispielsweise weist es ein Datenverarbeitungssystem zur Konturenerkennung auf. Das Datenverarbeitungssystem zur Konturenerkennung kann jedoch auch außerhalb des optischen Erfassungssystems (40) angeordnet sei. In diesem Fall werden die Rohdaten des Kamerasystems (42) an das Datenverarbeitungssystem übertragen. In der Konturenerkennung wird ausgehend von der Lage der Seitenwände (92) und der Stirnwände (93) des Transportbehälters (90) die Orientierung und die genaue Lage des Transportbehälters (90) an der Transportbehälter-Entnahmeposition (17) ermittelt. So kann z.B. ein schräg stehender Transportbehälter (90) oder es können Transportbehälter (90) mit unterschiedlichen äußeren Abmessungen erkannt werden.

Weiterhin werden mittels der Konturenerkennung Lage und die Orientierung der Stückgüter (1) relativ zu den Begrenzungswänden (92, 93) des Transportbehälters (90) ermittelt. Hierbei wird beispielsweise zum einen der Winkel der Konturen des einzelnen Stückguts (1) relativ zum Transportbehälter (90), zum anderen der Winkel dieses Stückguts (1) relativ zur Förderrichtung (12) der Transportbehälter-Zuführvorrichtung (11) ermittelt. Beispielsweise kann, z.B. beim Einsatz mehrerer Linsen oder einer zusätzlichen, beispielsweise laserbasierten Entfernungsmessung, zusätzlich die Lage des einzelnen Stückguts (1) in der Höhenrichtung (6) festgestellt werden.

Die Beleuchtungsvorrichtung (46) ist auf die Transportbehälter-Entnahmeposition (17) gerichtet. Beispielsweise umfasst sie eine Blitzleuchte, die die Oberseite des Transportbehälters (90) und die Stirnseiten (5) der Schuhkartons (1) während der Aufnahme des Kamerasystems (42) erhellt. Der Transportbehälter (90) und sein gesamter Inhalt werden beispielsweise mittels einer einzigen Belichtung erfasst.

Die Transportbehälter-Entladestation (10) weist als Handhabungsvorrichtung (5) einen an der Transportbehälter-Entladeposition (17) angeordneten Industrieroboter (51) mit mindestens einem Greifersystem (100) auf. Der Industrieroboter (51) ist beispielsweise ein Sechs-Achs-Roboter mit einer RRR-Kinematik. Bei einem derartigen Aufbau des Industrieroboters (51) sind alle drei Hauptachsen (52 - 54) Drehachsen. Der Industrieroboter (51) ist z.B. als Vertikal-Gelenkarm-Roboter ausgebildet. Er hat einen beispielsweise torusabschnittsförmigen Arbeitsraum. Die Hauptachsen (52 - 54) sind eine A-Achse (52), eine B-Achse (53) und eine C-Achse (54). Die A-Achse (52) umfasst einen Drehtisch (55) mit vertikaler Rotationsachse, der auf einem Sockel (56) angeordnet ist. Der Drehtisch (55) lagert als erstes Kinematikkettenglied einen um die horizontale B-Achse (53) z.B. um 210 Winkelgrade schwenkbaren Fußhebel (57). Am Ende des Fußhebels (57) sitzt als Gelenk mit ebenfalls horizontaler Schwenkachse die C-Achse (54), die den Kniehebel (58) trägt. Der Kniehebel (58) ist relativ zum Fußhebel (57) um z.B. 270 Winkelgrade schwenkbar.

Im Ausführungsbeispiel sind auch die drei Nebenachsen (61 - 63) des Industrieroboters (51) als rotatorische Achsen ausgebildet. Die erste Nebenachse (61), die D-Achse (61), umfasst einen um seine Längsachse drehbaren Tragarm (64), der am freien Ende des Kniehebels (58) gelagert ist. Die zweite Nebenachse (62) ist die E-Achse (62), um die der Handhebel (65) um z.B. 270 Winkelgrade schwenkbar gelagert ist. Der Handhebel (65) trägt einen um 360 Winkelgrade schwenkbaren Drehteller (66), der um die F-Achse (63) rotierbar gelagert ist. Am Drehteller (66) ist das Greifersystem (100) angeordnet. Hierbei kann das Greifersystem (100) direkt oder mittels eines Adapters am Drehteller (66) gelagert sein.

Beim Betrieb des Industrieroboters (51) kann das Greifersystem (100) über eine entsprechende Ansteuerung der einzelnen Achsen des Industrieroboters nahezu jede beliebige gerade Strecke oder gekrümmte Linie im Arbeitsraum abfahren. Auch ein anderer Aufbau des Industrieroboters (51), z.B. in der Bauform eines Portalroboters, eines Standsäulenroboters, eines Polarroboters, eines SCARA-Roboters, etc. ist denkbar.

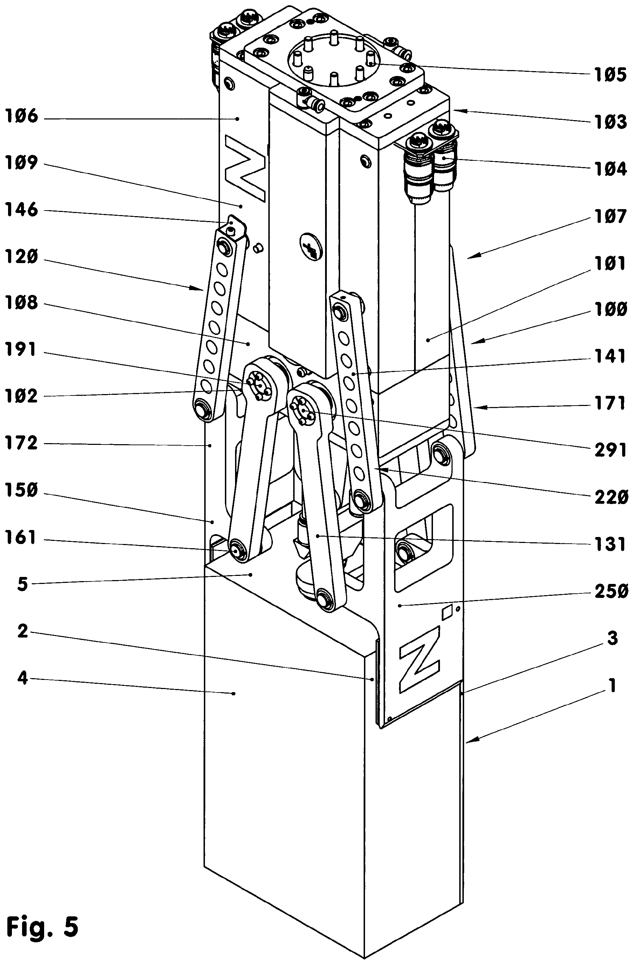

Die Figuren 5 - 13 zeigen das Greifersystem (100). Das Greifersystem (100) hat ein Trägerteil (101), das zwei relativ zueinander verstellbare Greifbacken (150, 250) trägt. Im Ausführungsbeispiel ist jede der Greifbacken (150; 250) mittels jeweils eines Parallelogrammgetriebes (120; 220) am Trägerteil (101) gelagert. Es ist aber auch denkbar, eine der Greifbacken (150; 250) starr am Trägerteil (101) anzuordnen und die andere Greifbacke (250; 150) relativ hierzu und relativ zum Trägergehäuse (101) mittels eines Parallelogrammgetriebes (220; 120) verstellbar auszubilden.

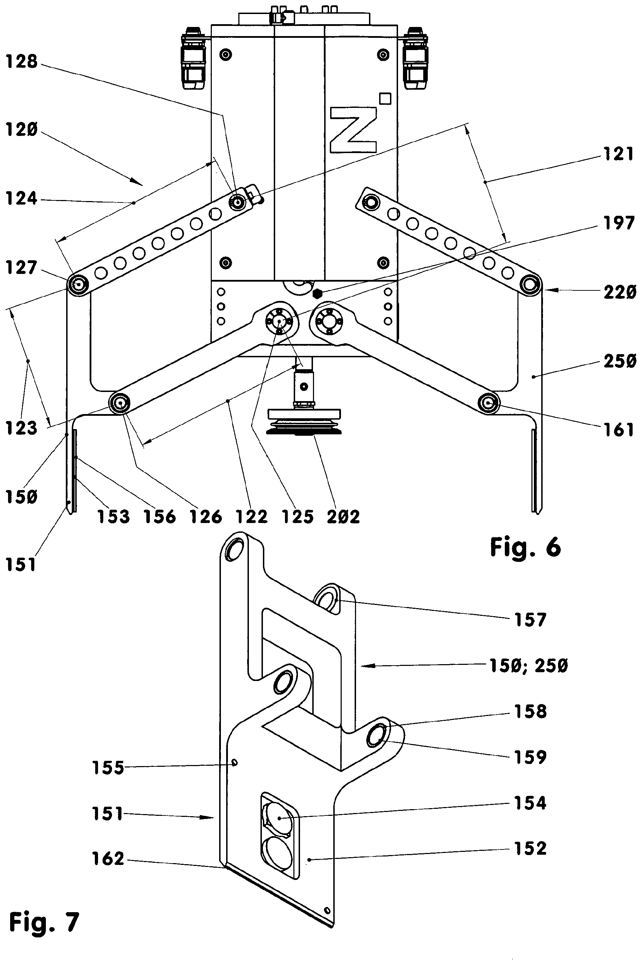

Die Figuren 5 und 6 zeigen das Greifersystem (100) mit geschlossenen und mit geöffneten Greifbacken (150, 250). In den Figuren 7 - 13 sind Einzelteile dieses Greifersystems (100) dargestellt. Das Trägerteil (101) ist quaderförmig aufgebaut. In seinem Anschlussbereich (103) hat es elektrische und z.B. pneumatische Anschlüsse (104) sowie Befestigungsanschlüsse (105), um das Greifersystem (100) an den Drehteller (66) des Industrieroboters (51) anzuschließen.

Die einzelne Greifbacke (150; 250) hat einen Belagträger (151) und einen am Belagträger (151) befestigten Greifbelag (153). Der Greifbelag (153) kann beispielsweise kraft- und/oder formschlüssig am Belagträger (151) befestigt sein. Im Ausführungsbeispiel sind die Greifbeläge (153) mittels Magneten (154) an den Belagträgern (151) fixiert, vgl. Figur 7. Zwei Zentrierungen (155) sichern die Lage des einzelnen Greifbelags (153) relativ zum Belagträger (151). Zusätzlich können am Greifbelag (153) oder am Belagträger (151) Drucksensoren zur Überwachung des Anpressdrucks angeordnet sein. Die im Ausführungsbeispiel identisch ausgebildeten Greifbeläge (153) sind beispielsweise plattenförmig ausgebildet und haben ebene, zueinander zeigende Greifflächen (156). Im Ausführungsbeispiel sind die Greifbeläge (153) Gummiplatten. Es ist aber auch denkbar, die Greifflächen (156) mit Strukturen auszubilden. Die beiden Greifbeläge (153) können auch unterschiedliche Gestalten und/oder unterschiedlich strukturierte Greifflächen (156) haben. So kann beispielsweise das Greifersystem (100) an die Greifzonen (2) des aufzunehmenden Stückguts (1) angepasst sein.

Die Belagträger (151) haben im Ausführungsbeispiel jeweils eine ebene Trägerfläche (152) zur Aufnahme jeweils eines Greifbelags (153). Es ist aber auch denkbar, einen oder beide Belagträger (151) z.B. abgewinkelt auszubilden. So kann beispielsweise ein Stückgut (1) mit dreieckiger Grundfläche aufgenommen werden. Die Belagträger (151) können austauschbar gestaltet sein. Auch eine Ausbildung der Greifbacken (150; 250) ohne Greifbelag (153) ist denkbar.

Der einzelne Belagträger (151) hat vier Lageraufnahmen (157, 158). Jeweils zwei dieser Lageraufnahmen (157; 158) fluchten miteinander. In jede der Lageraufnahmen (157, 158) ist eine Gleitbuchse (159) eingesetzt. Eine Verbindungsebene der Mittellinien der beiden Paare der Lageraufnahmen (157, 158) schließt mit der Ebene der Trägerfläche (152) beispielsweise einen Winkel von 20 Grad ein. Hierbei ist in den Darstellungen der Figuren 5 und 6 die Schnittlinie der beiden Ebenen die Mittellinie der oberen Lageraufnahmen (157) des Belagträgers (151). Die Trägerfläche (152) liegt jeweils außerhalb der Verbindungsebene. Bei montiertem Parallelogrammgetriebe (120; 220) ist in jeder der Lageraufnahmen (157, 158) ein Lagerbolzen (161) zur Bildung eines Gleitlagers angeordnet. Auch eine Ausführung mit Wälzlagern ist denkbar. Die Lagerstellen (125 - 128) sind weitgehend spielfrei gestaltet.

Im dargestellten Ausführungsbeispiel ist jede Greifbacke (150; 250) mittels jeweils eines Parallelogrammgetriebes (120; 220) relativ zur Trägerteil (101) verstellbar. Die beiden Parallelogrammgetriebe (120, 220) sind symmetrisch zu einer Mittenlängsebene der Greifersystems (100) ausgebildet. Es ist aber auch denkbar, eine der Greifbacken (150; 250) relativ zum Trägerteil (101) starr oder stufenweise verstellbar auszubilden. Auch können die Greifbacken (150; 250) mittels unterschiedlicher Getriebe ansteuerbar sein, wobei mindestens eines der Getriebe ein Parallelogrammgetriebe (120; 220) ist.

Das einzelne Parallelogrammgetriebe (120; 220) hat vier Getriebeglieder (121 - 124), die im Ausführungsbeispiel jeweils auf der Vorderseite (106) und auf der Rückseite (107) am Trägerteil (101) angeordnet sind. Es ist auch denkbar, das einzelne Parallelogrammgetriebe (120; 220) nur auf der Vorderseite (106) oder nur auf der Rückseite (107) des Trägerteils (101) zu lagern. Die einzelnen Getriebeglieder (121 - 124) sind zwei einander gegenüberliegende kurze Getriebeglieder (121, 123) und zwei einander gegenüberliegende lange Getriebeglieder (122, 124). In jeweils einem kurzen Getriebeglied (121; 123) sind zwei lange Getriebeglieder (122, 124) schwenkbar gelagert. In jedem langen Getriebeglied (122; 124) sind zwei kurze Getriebeglieder (121, 123) schwenkbar gelagert.

Die beiden kurzen Getriebeglieder (121, 123) haben die gleiche Länge. Auch die beiden langen Getriebeglieder (122, 124) haben eine zueinander identische Länge. Als Länge des einzelnen Getriebeglieds (121 - 124) ist hierbei der Mittenabstand der jeweiligen Lagerstellen (125, 126; 126, 127; 127, 128; 128, 125) bezeichnet. Im Ausführungsbeispiel beträgt die Länge der kurzen Getriebeglieder (121, 123) 71 % der Länge der langen Getriebeglieder (122, 124). Die Länge der kurzen Getriebeglieder (121, 123) kann zwischen 50 % und 80 % der Länge der langen Getriebeglieder (122, 124) betragen.

Die langen Getriebeglieder (122, 124) des Parallelogrammgetriebes (120; 220) sind eine Kurbel (122) und eine Schwinge (124). Die kurzen Getriebeglieder (121, 123) sind ein Gestell (121) und eine Koppel (123). Das Gestell (121) wird durch das Trägerteil (101) gebildet. Es ist das festgehaltene Getriebeglied. Im Trägerteil (101) sind die Kurbel (122) in einem Antriebsschwenkgelenk (125) und die Schwinge (124) schwenkbar gelagert. Hierbei ist die Kurbel (121) das angetriebene Getriebeglied (121). In den Darstellungen der Figuren 5 und 6 ist die Kurbel (121) das untenliegende Getriebeglied. Es ist aber auch denkbar, das Parallelogrammgetriebe (120; 220) von dem hier als Schwinge (124) bezeichneten Getriebeglied aus anzutreiben.

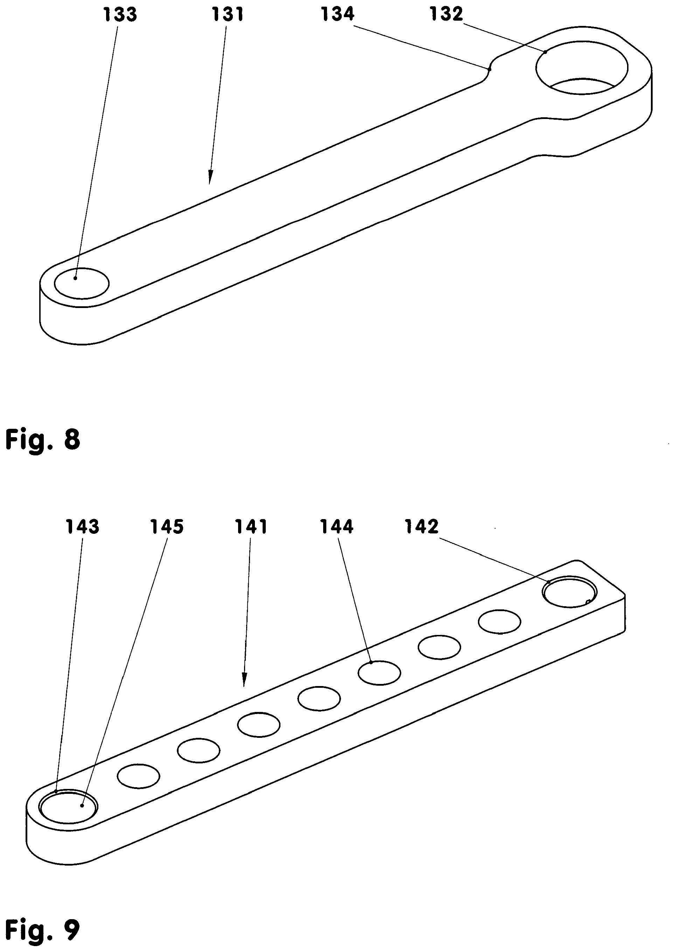

Die Figur 8 zeigt einen Kurbelhebel (131). Der Kurbelhebel (131) hat die Gestalt einer Pleuelstange. Er hat zwei Durchbrüche (132, 133), von denen ein Antriebszapfendurchbruch (132) in einem Pleuelabschnitt (134) des Kurbelhebels (131) angeordnet ist. Dieser Antriebszapfendurchbruch (132) ist als Durchgangsbohrung ausgebildet. Ein Schwenkzapfendurchbruch (133) ist am anderen Ende des Kurbelhebels (131) angeordnet. Der Durchmesser des Schwenkzapfendurchbruchs (133) beträgt beispielsweise 60 % des Durchmessers des Antriebszapfendurchbruchs (132). Der Mittenabstand des Antriebszapfendurchbruchs (132) und des Schwenkzapfendurchbruchs (133) wird als Länge der Kurbel (121) bezeichnet. Die Dicke des Kurbelhebels (131) verjüngt sich vom Antriebszapfendurchbruch (132) in Richtung des Schwenkzapfendurchbruchs (133). Gegebenenfalls kann der Kurbelhebel (131) entlang seines Körpers zusätzliche Einsenkungen und/oder Durchbrüche aufweisen.

In der Figur 9 ist ein Schwingenhebel (141) dargestellt. Der Schwingenhebel (141) hat einen Gestellzapfendurchbruch (142) und einen Koppelzapfendurchbruch (143). Im Ausführungsbeispiel ist der Durchmesser des Gestellzapfendurchbruchs (142) um 8 % größer als der Durchmesser des Koppelzapfendurchbruchs (143). Der Mittenabstand des Gestellzapfendurchbruchs (142) und des Koppelzapfendurchbruchs (143) ist die Länge der Schwinge (124). Beispielsweise ist der Schwingenhebel (141) an der Seite des Koppelzapfendurchbruchs (143) abgerundet ausgebildet. Zwischen dem Gestellzapfendurchbruch (142) und dem Koppelzapfendurchbruch (143) sind beispielsweise sieben Entlastungsdurchbrüche (144) angeordnet. Sowohl im Gestellzapfendurchbruch (142) als auch im Koppelzapfendurchbruch (143) sind im Ausführungsbeispiel Gleitlagerhülsen (145) eingesetzt. Die Lagerstellen (127) und (128) können auch mit Wälzlagern ausgebildet sein.

Die Länge der Koppel (123) ist der Mittenabstand der Lageraufnahmen (157, 158) der Greifbacke (150; 250), vgl. Figur 7. Die Koppel (123) wird durch den Belagträger (151) gebildet. Der Belagträger (151) ist z.B. in seinem unteren Bereich blechartig ausgebildet. Beispielsweise hat er eine untenliegende Schneide (162). Die Schneide (162) kann z.B. so ausgebildet sein, dass sie zur Trägerfläche (152) spitz zuläuft.

Im Ausführungsbeispiel verbinden der jeweilige Belagträger (151) und das Trägerteil (101) den hinteren Teil (171) und den vorderen Teil (172) des Parallelogrammgetriebes (120; 220). Es ist auch denkbar, dass der hintere und der vordere Teil des Kurbelhebels (131) und/oder des Schwingenhebels (141) bereichsweise miteinander verbunden sind. Diese Verbindung ist dann z.B. jeweils in dem an die Greifbacken (150; 250) angrenzenden Bereich ausgebildet.

Zwischen den beiden Greifbacken (150; 220)) ist im Ausführungsbeispiel ein Sauggreifersystem (200) angeordnet. Dieses umfasst einen Sauggreifer (201) mit einem Saugnapf (202), der in den Darstellungen der Figuren 1, 2, 5 und 6 nach unten aus dem Trägerteil (101) herausragt. Beispielsweise ist das Sauggreifersystem (200) mittig im Trägerteil (101) angeordnet. Der Sauggreifer (201) ist relativ zum Trägerteil (101) höhenverstellbar ausgebildet. An seinem dem Trägerteil (101) abgewandten Ende trägt der Sauggreifer (201) den Saugnapf (202). Die Geometrie des Saugnapfs (202) ist beispielsweise durch zwei Hauptachsen unterschiedlicher Länge bestimmt. Im Ausführungsbeispiel ist der Saugnapf (202) oval ausgebildet. Auch eine elliptische, annähernd rechteckige Ausbildung mit abgerundeten Ecken, etc. ist denkbar. Das Greifersystem (100) kann auch ohne ein Sauggreifersystem (200) ausgebildet sein.

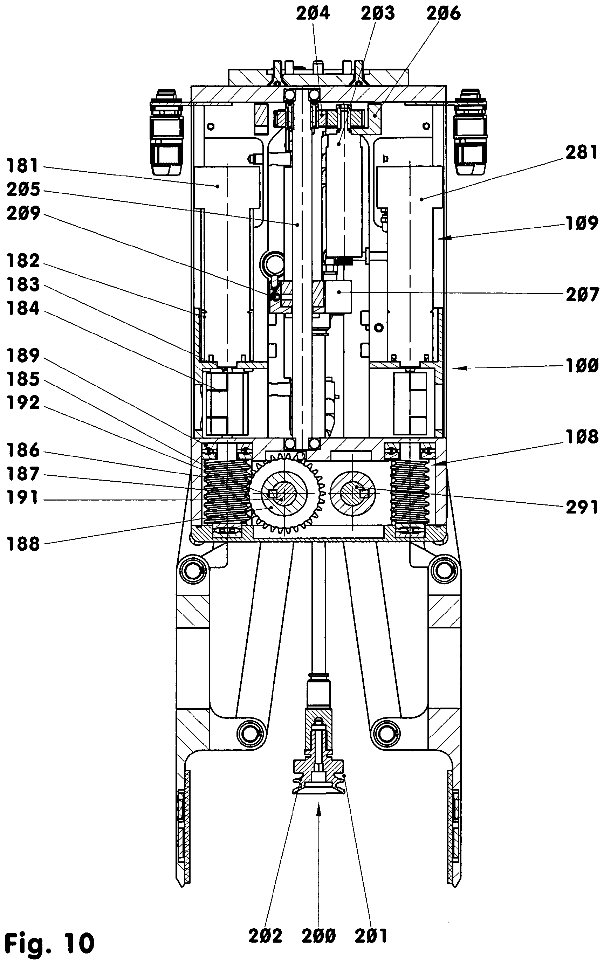

Die Figur 10 zeigt eine Schnittdarstellung des Greifersystems (100). Die Schnittebene ist eine Mittenlängsebene des Greifersystems (100), die die beiden Parallelogrammgetriebe (120; 220) schneidet. Das Trägerteil (101) hat einen Getriebekasten (108) und einen Motorraum (109). Im Motorraum (109) sind beispielsweise drei Elektromotoren (181, 281, 203) angeordnet. Die einzelnen Elektromotoren (181, 281, 203) sind z.B. Servomotoren (181, 281, 203) und haben einen Drehgeber. Ihre Systemspannung beträgt beispielsweise 24 Volt. Alle Elektromotoren (181, 281, 203) haben z.B. einen integrierten Antriebsregler. Dieser Antriebsregler überwacht und regelt beispielsweise die die Drehzahl, das Moment und den zurückgelegten Weg eines Umfangspunktes der Motorwelle. Die Elektromotoren (181; 281; 203) sind unabhängig voneinander ansteuerbar. Die beiden außenliegenden Elektromotoren (181, 281) treiben jeweils eine der Greifbacken (150; 250) mittels der Parallelogrammgetriebe (120; 220) an. Diese beiden Elektromotoren (181, 281) sind beispielsweise zueinander identisch aufgebaut. Sie sind im Folgenden als Greifbackenmotoren (181, 281) bezeichnet. Der mittlere Elektromotor (203) ist Teil des Sauggreifersystems (200). Dieser Sauggreifermotor (203) ist im Ausführungsbeispiel kleiner ausgebildet als die Greifbackenmotoren (181, 281).

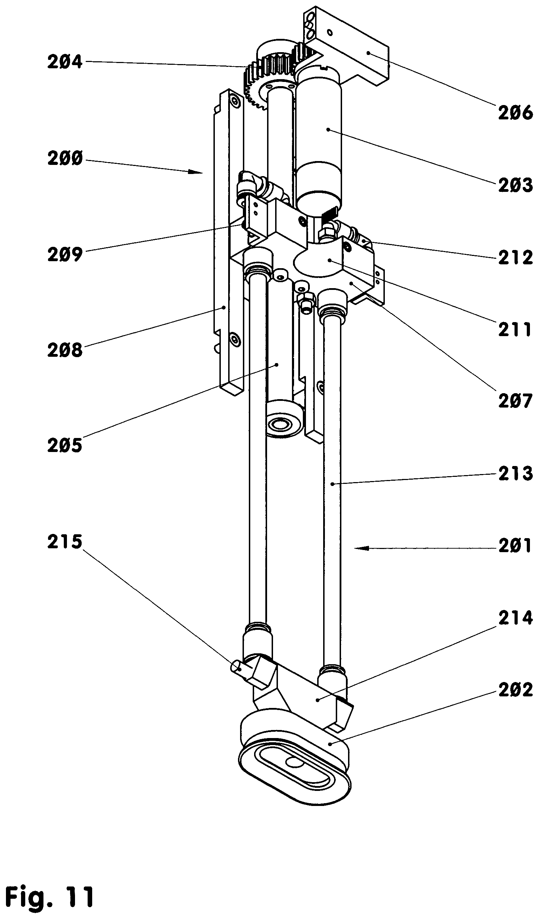

In der Figur 11 ist das Sauggreifersystem (200) dargestellt. Der Sauggreifermotor (203) treibt über ein Zahnradgetriebe (204) eine Gewindespindel (205) an. Der Sauggreifermotor (203) ist mittels einer Halterung (206) im Trägerteil (101) fixiert. Die Gewindespindel (205) ist beispielsweise eine zweigängige Trapezgewindespindel, eine Kugelgewindespindel, ein Schraubgewindetrieb, etc. Im Ausführungsbeispiel hat die Trapezgewindespindel einen Durchmesser von 12 Millimetern und eine Steigung von 6 Millimetern. Es ist auch denkbar, ein Gewinde mit geringerer Steigung einzusetzen. Beispielsweise kann der Spindeltrieb (205, 207) selbsthemmend ausgebildet sein. Die blockartig ausgebildete z.B. zweigängige Spindelmutter (207) ist im eingebauten Zustand entlang zweier Führungsleisten (208) geführt. Die einzelne Führungsleiste (208) ist beispielsweise eine Kunststoffleiste, die gleichzeitig als Verdrehsicherung der Spindelmutter (207) dient. An der Spindelmutter (207) ist ein Schmiernippel (209) angeordnet.

An ihrer den Führungsleisten (208) abgewandten Seite hat die Spindelmutter (207) eine Ausnehmung (211). In diese Ausnehmung (211) kann der Sauggreifermotor (203) beim Verfahren der Spindelmutter (207) eintauchen. Weiterhin hat die Spindelmutter (207) zwei Pneumatikanschlüsse (212). An der Spindelmutter (207) sind zwei starre Hubstangen (213) angeordnet. Beide Hubstangen (213) sind identisch ausgebildet und haben die gleiche Länge. Sie haben jeweils einen innenliegenden Pneumatikkanal. Jeder dieser Pneumatikkanäle ist mit einem Pneumatikanschluss (212) verbunden. Beide Hubstangen (213) münden in einen Sammler (214). An diesen Sammler (214) ist der Saugnapf (202) angeschlossen. Gegebenenfalls können an den Sammler (214) weitere Saugelemente angeschlossen sein. Der Saugnapf (202) kann austauschbar ausgebildet sein.

Beim montiertem Greifersystem (100) ist jeder der Pneumatikanschlüsse (212) der Spindelmutter (207) mit einem Pneumatikanschluss (104) des Trägerteils (101) verbunden. In jeder der Pneumatikleitungen wird der Druck erfasst. Liegt die Druckdifferenz der beiden Pneumatikleitungen oberhalb eines Schwellenwerts, wird eine Fehlermeldung ausgegeben. Ein Anschlag (215) begrenzt den Hub des Sauggreifersystems (200).

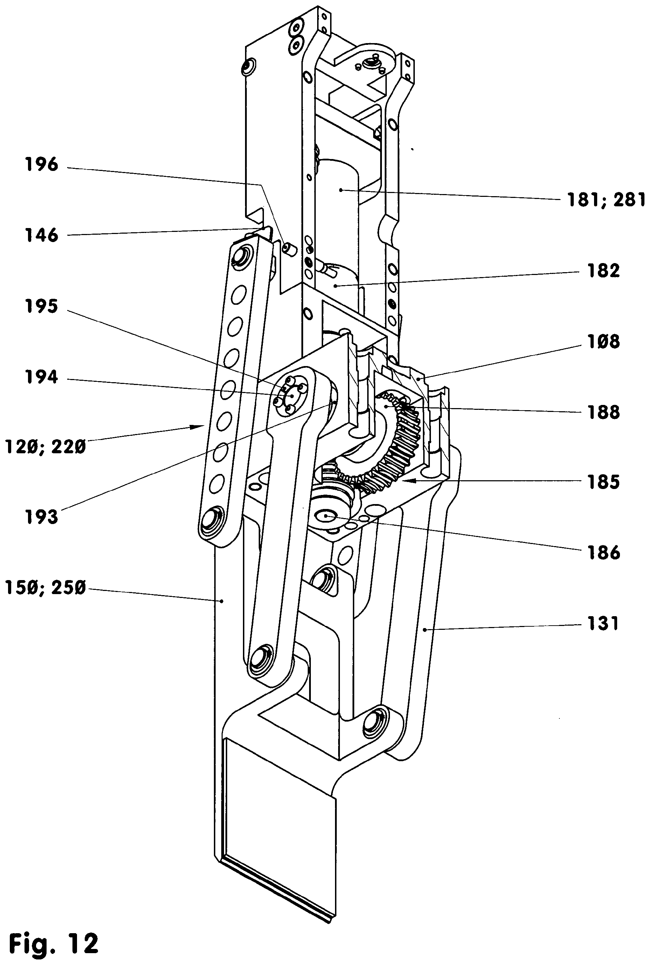

Die Figur 12 zeigt eine Greifbacke (150; 250) mit ihrem Antrieb. Der Greifbackenmotor (181; 281) ist im Trägerteil (101) befestigt. Er hat im Ausführungsbeispiel ein nachgeschaltetes Untersetzungsgetriebe (182). Das Untersetzungsgetriebe (182) ist beispielsweise ein Umlaufgetriebe in der Bauart eines Planetengetriebes. Es ist im Ausführungsbeispiel ein Zahnradgetriebe mit zueinander parallelen Achsen. Mittels dieses Untersetzungsgetriebes (182) wird die Motordrehzahl des Greifbackenmotors (181; 281) um den Übersetzungsfaktor verringert.

Die Übersetzung des Untersetzungsgetriebes (182) ist beispielsweise größer als 10. Das Untersetzungsgetriebe (182) kann auch einen anderen Aufbau aufweisen.

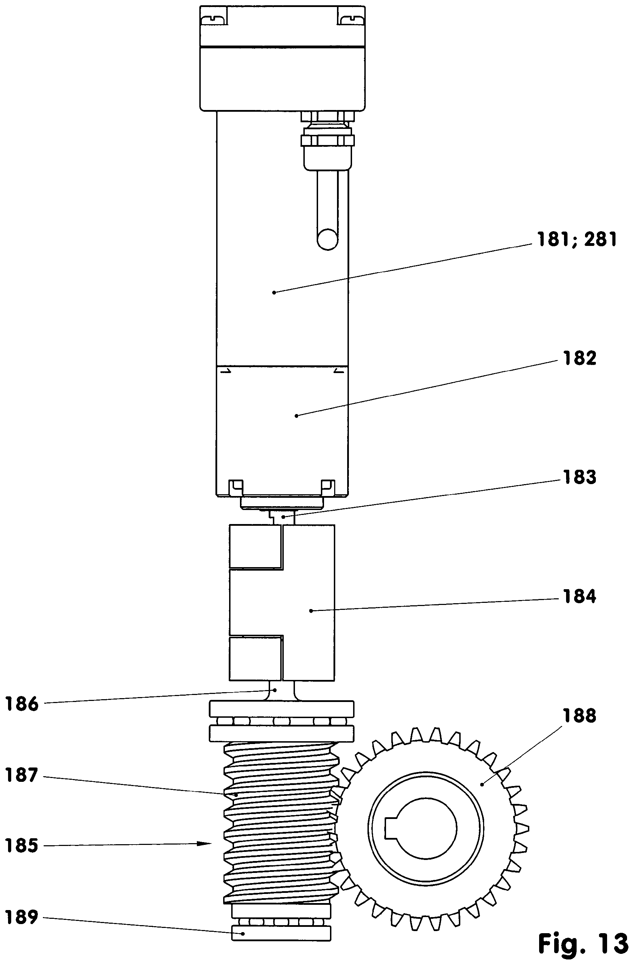

Am Getriebeausgang (183) des Untersetzungsgetriebes (182) ist mittels einer Wellenkupplung (184) ein weiteres Wälzgetriebe (185) angeschlossen, vgl. die Figuren 10 und 13. Die Wellenkupplung (184) ist eine nichtschaltbare drehsteife Ausgleichskupplung. Das der Wellenkupplung (184) nachgeschaltete Wälzgetriebe (185) ist als Umlenkgetriebe (185) ausgebildet und hat Räder (187, 188) mit sich kreuzenden Achsen. Im Ausführungsbeispiel ist dieses Umlenkgetriebe (185) ein Schneckengetriebe (185). Es ist aber auch denkbar, ein Kegelschraubradpaar oder ein Stirnschraubradpaar einzusetzen. Auch der Einsatz eines Wälzgetriebes mit sich schneidenden Achsen, z.B. eines Kegelradgetriebes, ist denkbar.

Das Schneckengetriebe (185) hat eine mit der Wellenkupplung (184) verbundene Schneckenwelle (186) und ein Schneckenrad (188). Die Schneckenwelle (186) ist im Getriebekasten (108) des Trägerteils (101) beispielsweise in zwei Axiallagern (189) gelagert. Die Schneckenwelle (186) trägt im Ausführungsbeispiel eine eingängige Schnecke (187). Der Steigungswinkel der Schnecke (187) beträgt beispielsweise 5 Grad. Die Schnecke (187) ist im Ausführungsbeispiel eine zylindrische Schnecke (187). Auch der Einsatz einer Globoidschnecke ist denkbar.

Das Schneckenrad (188) hat in der Darstellung der Figur 13 30 Zähne. Es ist als Globoidrad ausgebildet. Bei einer Ausbildung der Schnecke (187) als Globoidschnecke kann das Schneckenrad (188) auch als Stirnrad ausgebildet sein. Das Schneckenrad (188) sitzt z.B. formschlüssig auf einer Abtriebswelle (191; 291). Beispielsweise hat es eine Passfedernut (192) zur Aufnahme einer Passfeder einer Passfederverbindung. Auch eine andere Gestaltung der Wellen-Naben-Verbindung ist denkbar. Diese kann als Keilwellenverbindung, Polygonwellenverbindung, Zahnwellenverbindung, Kegelpressverbindung etc. ausgebildet sein. Gegebenenfalls ist auch der Einsatz eines Spannelements denkbar. Mittels des Schneckengetriebes (185) wird die Drehzahl der Schnecke um das Übersetzungsverhältnis des Schneckengetriebes ins Langsame übersetzt.

Die Abtriebswelle (191; 291) ist im Getriebekasten (108) in zwei Wälzlagern (193) gelagert. Im Ausführungsbeispiel sind diese Wälzlager (193) beidseitig abgedichtete Rillenkugellager. Diese sind Teil des Antriebsschwenkgelenks (125) des Parallelogrammgetriebes (120; 220). Aus dem Getriebekasten (108) ragt die Abtriebswelle (191; 291) beidseitig mit einem zylindrisch ausgebildeten Wellenende (194) heraus. Das verschlossene Getriebekasten (108) ist über einen Schmiernippel (197) schmierbar.

Auf jedem Wellenende (194) der Abtriebswelle (191; 291) ist mittels eines Spannelements (195) ein Kurbelhebel (131) fixiert. Das Spannelement (195) kann beispielsweise ein Ringkegel-Spannelement, eine Ringspann-Sternscheibe, eine Druckhülse, etc. sein. Das Wellenende (194) durchdringt hierbei den Antriebszapfendurchbruch (132) des Kurbelhebels (131). Die Kurbelhebel (131) an beiden Enden der Abtriebswelle (191; 291) sind parallel zueinander ausgerichtet. Bei Ausbildung der Wellen-Naben-Verbindung des Schneckenrads (188) mittels eines Spannelements können die Wellen-Naben-Verbindungen der Abtriebswelle (191; 291) und der Kurbelhebel (131) auch formschlüssig, z.B. als Vielzahnverbindung, Polygonverbindung, etc. ausgebildet sein.

Am Trägerteil (101) ist ein Schwenkanschlag (196) angeordnet. Dieser begrenzt zusammen mit einem am Schwingenhebel (141) angeordneten Anschlagbügel (146) den Öffnungshub des Greifsystems (100). Beispielsweise bilden diese Anschläge (146, 196) einen Referenzpunkt des Greifersystems (100).

Das Greifersystem (100) kann auch ohne das Untersetzungsgetriebe (182) oder ohne das Umlenkgetriebe (185) ausgebildet sein. Bei einer Ausführung ohne das Umlenkgetriebe (185) bildet der Getriebeausgang (183) des Untersetzungsgetriebes (182) die Abtriebswelle (183). Diese Abtriebswelle (183) des Untersetzungsgetriebes (182) ist dann form- und/oder kraftschlüssig mit dem Kurbelhebel (131) verbunden.

Das Greifersystem (100) ist so ausgebildet, dass alle Antriebsmotoren (181, 281, 203) mittels eines CAN-Bus ansprechbar sind. Beispielsweise wird nur ein CAN-Bus-Master und die Stromversorgung eingesetzt.

Beim Betrieb wird mittels der Transportbehälter-Zuführvorrichtung (11) der einzelne befüllte Transportbehälter (90) an die Transportbehälter-Entladeposition (17) gefördert. Im Transportbehälter (90) stehen die Schuhkartons (1) beispielsweise senkrecht. Sobald der Transportbehälter (90) die Transportbehälter-Entnahmeposition (17) erreicht hat, bedämpft er den Näherungssensor (23). Das Gurtbandförderer (13) wird angehalten. Das z.B. starr befestigte Kamerasystem (42) nimmt, z.B. unter Zuschaltung der Beleuchtungseinheit (46), ein beispielsweise stereoskopisches Bild des Transportbehälters (90) auf. Aus diesem Bild ermittelt die Konturenerkennung die Lage der Schuhkartons (1) relativ zu den Seitenwänden (92) und den Stirnwänden (93) des Transportbehälters (90) sowie zur Förderrichtung (12) der Transportbehälter-Zuführvorrichtung (11). Diese Daten beschreiben für jeden einzelnen Schuhkarton (1) seine Ist-Lage. Aus diesen Ist-Daten wird für jeden einzelnen Schuhkarton (1) ein Sollwertdatensatz für die Handhabungsvorrichtung (50) ermittelt. Dieser Sollwertdatensatz umfasst beispielsweise Angaben zur Mittenposition der F-Achse (63) an der Transportbehälter-Entladeposition (17) sowie der Drehwinkellage der F-Achse (63) relativ zur Förderrichtung (12) der Transportbehälter-Zuführvorrichtung (11). Außerdem enthält der Sollwertdatensatz Angaben über den minimalen und/oder maximalen Öffnungshub der Greifbacken (150, 250). Der Industrieroboter (10) verfährt mittels dieser Informationen das Greifersystem (100) über den zu entnehmenden Schuhkarton (1), sodass die Greifbacken (150, 250) z.B. parallel zu den Greifzonen (2) des Schuhkartons (1) stehen. Die Greifbacken (150, 250) stehen hier bei in einer Normalprojektion auf den Transportbehälter (90) innerhalb der Seitenwände (92) und Stirnwände (93) des Transportbehälters (90). Hierfür werden die beiden Greifbacken (150; 250) aus einer Grundstellung geöffnet oder geschlossen, sodass ihr Abstand zueinander größer ist als die Greiflänge des Schuhkartons (1). Beispielsweise ist ihr Abstand zueinander um wenige Zentimeter größer als die Greiflänge des Schuhkartons (1).

Um die Greifbacken (150; 250) zu öffnen, werden beide Greifbackenmotoren (181, 281) gedreht. Die Drehrichtung wird so gewählt, dass in der Darstellung der Figur 6 die links dargestellte Abtriebswelle (191; 291) im Uhrzeigersinn dreht. Die rechts dargestellte Abtriebswelle (291; 191) dreht entgegen dem Uhrzeigersinn. Beide Parallelogrammgetriebe (120, 220) werden mittels der drehenden Abtriebswellen (191, 291) geschwenkt. Hierbei behalten die Koppel (123) und damit die Greifbacken (150; 251) ihre Winkellage im Raum. Das Greifbackenlagerstelle (126) wird auf einem Kreisbahnabschnitt um das Antriebsschwenkgelenk (125) bewegt. Die hohe Gesamtübersetzung der Wälzgetriebe (182, 185) bewirkt ein geringes, auf die Motorwelle des jeweiligen Greifbackenmotors (181; 281) reduziertes Trägheitsmoment des jeweiligen Parallelogrammgetriebes (120; 220). Der Greifbackenantrieb ist damit für hohe Beschleunigungen und Verzögerungen einsetzbar. Nach dem Abschalten der Greifbackenmotoren (181, 281) verharren die Greifbacken (150, 250) aufgrund der Selbsthemmung des Schneckengetriebes (185) in ihrer eingestellten Position.

An der Transportbehälter-Entladeposition (17) zeigen die Greifbacken (150; 250) und der Saugnapf (202) nach unten. Der Sauggreifer (201) wird aus einer Bereitschaftsposition ausgefahren. In der Bereitschaftsposition wird beispielsweise ein Referenzschalter, z.B. ein induktiver Sensor bedämpft. Zum Ausfahren des Sauggreifers (201) dreht der Sauggreifermotor (203) über das Zahnradgetriebe (204) die Gewindespindel (205). Die Spindelmutter (207) wird abgesenkt. Der starr mit der Spindelmutter (207) verbundene Saugnapf (202) wird ausgefahren. Beim oder nach dem Einschalten der Absaugung kann der Saugnapf (202) auf den Schuhkarton (1) aufsetzen. Die Absaugung kann mittels eines Absaugkreises, der durch beide Hubstangen (213) hindurch ansaugt oder mittels zweier paralleler Absaugkreise erfolgen.

Beim erneuten Anheben des Sauggreifers (201) - der Sauggreifermotor (203) dreht in die entgegengesetzte Richtung - wird der Schuhkarton (1) angehoben. Sobald der Saugnapf (202) z.B. oberhalb der Greifbacken (150, 250) steht, können die Greifbacken (150, 250) geschlossen werden. Sie legen sich mit den Greifbelägen (153) z.B. an den Deckel (3) und an den Boden des Schuhkartons (1) an. Gegebenenfalls kann der Sauggreifer (201) nun wieder entlastet werden. Er kann dann in seine Bereitschaftslage verfahren. Die symmetrische Anordnung der Greifbacken (150, 250) führt zu einer gleichmäßigen Belastung des Trägerteils (101) und des Handhabungsroboters (51).

Der Industrieroboter (51) schwenkt den aufgenommenen Schuhkarton (1) über die Aufgaberutsche (33). Hier wird das Greifersystem (100) abgesenkt. Der einzelne Schuhkarton (1) wird auf der Aufgaberutsche (33) abgelegt. Beim Ablegen des Schuhkartons (1) werden die Greifbacken (150, 250) wieder geöffnet. Hierfür werden die Greifbackenmotoren (181, 281) in die entgegengesetzten Richtungen gedreht. Anschließend wird der Industrieroboter (51) zurück zur Transportbehälter-Entnahmeposition (17) geschwenkt. Der Schuhkarton (1) gleitet entlang der Aufgaberutsche (33) auf den Stückgut-Bandförderer (32).

Es ist denkbar, bei einem Transport des Schuhkartons (1) allein mittels des Sauggreifers (201) die Greifbacken (150, 250) an der Stirnseite (5) des Schuhkartons (1) anzulegen. Die Greifbacken (150, 250) dienen dann der Abstützung des Schuhkartons (1).

Die schmalen Belagträger (151) können auch so positioniert werden, dass sie in die Zwischenräume zwischen zwei Schuhkartons (1) eintauchbar sind. Gegebenenfalls kann der Schuhkarton (1) dann auch allein mit den Greifbacken (150, 250) entnommen werden.

Auch bei einer Ausführung des Greifersystems (100) mit mehr als zwei Greifbacken (150, 250) ist mindestens eine der Greifbacken (150; 250) so ausgebildet und so angesteuert, wie oben beschrieben. Die anderen Greiferbacken (250; 150) können dann relativ zum Trägerteil (101) starr sein oder ebenfalls verstellbar ausgebildet sein.

Nach der Entnahme aller Schuhkartons (1) aus dem Transportbehälter (90) wird der entleerte Transportbehälter (90) mittels der Querschubzylindereinheit (18) auf die Leerguttransportvorrichtung (25) verschoben. Die Leerguttransportvorrichtung (25) fördert den leeren Transportbehälter (90) als Leergut z.B. zur Transportbehälter-Beladeposition. Die Transportbehälter-Zuführvorrichtung (11) fördert den nächsten zu entladenden Transportbehälter (90) an die Transportbehälter-Entladeposition (17).

Auch Kombinationen der einzelnen Ausführungsbeispiele sind denkbar.

### Bezugszeichenliste:

- 1: Stückgut, Schuhkarton
- 2: Greifzonen
- 3: Deckel
- 4: Grundteil
- 5: Stirnseite
- 6: Höhenrichtung

- 10: Transportbehälter-Entladestation
- 11: Transportbehälter-Zuführvorrichtung
- 12: Förderrichtung von (11)
- 13: Gurtbandförderer
- 14: Gurtband
- 15: Leitschiene, erste Leitschiene
- 16: Leitschiene
- 17: Transportbehälter-Entladeposition
- 18: Querschubzylindereinheit
- 19: Zylinder-Kolben-Einheit

- 21: Druckplatte
- 22: Stirnschiene
- 23: Sensor

- 25: Leerguttransportvorrichtung
- 26: Anlageschiene
- 27: Förderrichtung von (25)

- 31: Stückguttransportvorrichtung
- 32: Stückgut-Bandförderer
- 33: Aufgaberutsche
- 34: Förderrichtung von (31)
- 35: Gleitfläche
- 40: optisches Erfassungssystem
- 41: Stativ
- 42: Kamerasystem

- 46: Beleuchtungsvorrichtung

- 50: Handhabungssystem
- 51: Industrieroboter
- 52: A-Achse, Hauptachse von (51)
- 53: B-Achse, Hauptachse von (51)
- 54: C-Achse, Hauptachse von (51)
- 55: Drehtisch
- 56: Sockel
- 57: Fußhebel
- 58: Kniehebel

- 61: D-Achse, Nebenachse von (51)
- 62: E-Achse, Nebenachse von (51)
- 63: F-Achse, Nebenachse von (51)
- 64: Tragarm
- 65: Handhebel
- 66: Drehteller

- 90: Transportbehälter
- 91: Boden
- 92: Seitenwände
- 93: Stirnwände
- 94: Griffmulden

- 100: Greifersystem
- 101: Trägerteil
- 102: Unterkante
- 103: Anschlussbereich
- 104: elektrische und pneumatische Anschlüsse
- 105: Befestigungsanschlüsse
- 106: Vorderseite
- 107: Rückseite
- 108: Getriebekasten
- 109: Motorraum

- 120; 220: Parallelogrammgetriebe
- 121: Getriebeglied, Gestell, kurzes Getriebeglied
- 122: Getriebeglied, Kurbel, Langes Getriebeglied
- 123: Getriebeglied, Koppel, kurzes Getriebeglied
- 124: Getriebeglied, Schwinge, langes Getriebeglied
- 125: Lagerstelle an (121) und (122), Antriebsschwenkgelenk
- 126: Lagerstelle an (122) und (123), Greifbackenlagerstelle
- 127: Lagerstelle an (123) und (124)
- 128: Lagerstelle an (124) und (121)

- 131: Kurbelhebel
- 132: Durchbruch, Antriebszapfendurchbruch
- 133: Durchbruch, Schwenkzapfendurchbruch
- 134: Pleuelabschnitt

- 141: Schwingenhebel
- 142: Gestellzapfendurchbruch
- 143: Koppelzapfendurchbruch
- 144: Entlastungsdurchbrüche
- 145: Gleitlagerbuchsen
- 146: Anschlagbügel

- 150; 250: Greifbacken
- 151: Belagträger
- 152: Trägerfläche
- 153: Greifbelag
- 154: Magnete
- 155: Zentrierungen
- 156: Greifflächen
- 157: Lageraufnahme, oben
- 158: Lageraufnahme, unten
- 159: Gleitbuchse

- 161: Lagerbolzen
- 162: Schneide

- 171: hinterer Teil von (120; 220)
- 172: vorderer Teil von (120; 220)

- 181, 281: Elektromotor, Servomotor, Greifbackenmotoren
- 182: Untersetzungsgetriebe, Wälzgetriebe
- 183: Getriebeausgang, Abtriebswelle
- 184: Wellenkupplung
- 185: Wälzgetriebe, Umlenkgetriebe, Schneckengetriebe
- 186: Schneckenwelle
- 187: Wälzrad, Schnecke
- 188: Wälzrad, Schneckenrad
- 189: Axiallager

- 191, 291: Abtriebswelle
- 192: Passfedernut
- 193: Wälzlager
- 194: Wellenende
- 195: Spannelement
- 196: Schwenkanschlag
- 197: Schmiernippel

- 200: Sauggreifersystem
- 201: Sauggreifer
- 202: Saugnapf
- 203: Elektromotor, Servomotor, Sauggreifermotor
- 204: Zahnradgetriebe
- 205: Gewindespindel, Teil des Spindeltriebs
- 206: Halterung
- 207: Spindelmutter, Teil des Spindeltriebs
- 208: Führungsleiste
- 209: Schmiernippel

- 211: Ausnehmung
- 212: Pneumatikanschlüsse
- 213: Hubstangen
- 214: Sammler
- 215: Anschlag

## Patentansprüche

1. Transportbehälter-Entladestation (10) mit einer Transportbehälter-Zuführvorrichtung (11), mit einer Leerguttransportvorrichtung (25), mit einer Stückguttransportvorrichtung (31), mit einem einen mindestens ein Greifersystem (100) tragenden Industrieroboter (51) aufweisenden Handhabungssystem (50) und mit einem auf eine Transportbehälter-Entladeposition (17) gerichteten Kamerasystem (42), **dadurch gekennzeichnet,**
- **dass** das Handhabungssystem (50) mittels eines aus mittels des Kamerasystems (42) erfassten geometrischen Daten ermittelten Sollwertdatensatzes an der Transportbehälter-Entladeposition (17) steuerbar ist,
- **dass** das Greifersystem (100) mindestens zwei relativ zueinander verstellbare Greifbacken (150, 250) aufweist,
- **dass** mindestens eine dieser Greifbacken (150; 250) mittels eines Parallelogrammgetriebes (120; 220) antreibbar ist und
- **dass** das Greifersystem (100) mittels des Industrieroboters (51) oberhalb der Stückguttransportvorrichtung (31) positionierbar ist.

2. Transportbehälter-Entladestation (10) nach Anspruch 1, **dadurch gekennzeichnet, dass** die Transportbehälter-Zuführvorrichtung (11) beidseitige Leitschienen (15, 16) aufweist.

3. Transportbehälter-Entladestation (10) nach Anspruch 1, **dadurch gekennzeichnet, dass** die Transportbehälter-Entladeposition (17) mindestens einen Sensor (23) aufweist.

4. Transportbehälter-Endladestation (10) nach Anspruch 1, **dadurch gekennzeichnet, dass** zumindest die Transportbehälter-Zuführtransvorrichtung (11) einen getaktet fördernden Gurtbandförderer (13) umfasst.

5. Transportbehälter-Entladestation (10) nach Anspruch 1, **dadurch gekennzeichnet, dass** die Stückguttransportvorrichtung (31) eine Aufgaberutsche (33) aufweist.

6. Transportbehälter-Entladestation (10) nach Anspruch 1, **dadurch gekennzeichnet, dass** das Greifersystem (100) ein Trägerteil (101) und ein relativ zum Trägerteil (101) höhenverstellbares Sauggreifersystem (200) umfasst.

7. Verfahren zum Entladen eines mit Stückgütern (1) beladenen Transportbehälters (90) an einer Transportbehälter-Entladestation (10) nach Anspruch 1,
- wobei der zu entladende Transportbehälter (90) mittels der Transportbehälter-Zuführvorrichtung (11) in die Transportbehälter-Entladeposition (17) gefördert wird,
- wobei das Kamerasystem (42) zumindest die Kontur des Transportbehälters (90) und die Kontur der Stückgüter (1) im Transportbehälter (90) erfasst,
- wobei aus den mittels des Kamerasystems (42) erfassten geometrischen Daten des Transportbehälters (90) und der darin gelagerten Stückgüter (1) für jedes einzelne Stückgut (1) ein Sollwert-Datensatz zur Steuerung des Handhabungssystems (50) ermittelt wird,
- wobei mittels des Industrieroboters (51) das Greifersystem (100) oberhalb des Transportbehälters (90) an der Transportbehälter-Entladeposition (17) positioniert wird,
- wobei das Handhabungssystem (50) mittels des Greifersystems (100) ein einzelnes Stückgut (1) aus dem Transportbehälter (90) entnimmt,
- wobei der Industrieroboter (51) das Greifersystem (100) oberhalb der Stückguttransportvorrichtung (31) positioniert und
- wobei das Greifersystem (100) das Stückgut (1) auf der Stückguttransportvorrichtung (31) ablegt.

8. Verfahren nach Anspruch 7, **dadurch gekennzeichnet**, wobei das Greifersystem (100) das Stückgut (1) zunächst mittels eines Sauggreifersystems (200) kontaktiert und anhebt und wobei nachfolgend die Greifbacken (150, 250) an das angehobene Stückgut (1) angelegt werden.
